# EUROPEAN PATENT SPECIFICATION

(11) **EP 0 543 481 B1**
(45) Date of publication and mention of the grant of the patent: **12.02.1997**
(21) Application number: 92306959.5
(22) Date of filing: 30.07.1992
(51) Int. Cl.: G11B 7/09, G11B 7/13, G11B 7/135

(54) **Optical information-reproducing apparatus using separately located photodetector assemblies**
Optisches Informationsaufnahmegerät mit abgetrennt-eingeordneten Fotodetektoreinrichtungen
Appareil de reproduction d'information avec des assemblages de photodétecteurs localisés séparément

(30) Priority: 18.11.1991 JP 301772/91; 18.11.1991 JP 301773/91; 18.11.1991 JP 301774/91
(43) Date of publication of application: 26.05.1993
(73) Proprietor: PIONEER ELECTRONIC CORPORATION, Meguro-ku Tokyo 153 (JP)
(72) Inventor: Takahashi, Shinichi, c/o Pioneer Electronic Corp., Tokorozawa-shi, Saitama (JP)
(74) Representative: Brunner, Michael John

(56) References cited:
- EP-A- 0 241 942
- FR-A- 2 601 174
- US-A- 4 973 831
- US-A- 5 018 804
- PATENT ABSTRACTS OF JAPAN vol. 10, no. 312 (P-509)(2368) 23 October 1986 & JP-A-61 122 944

## Description

The present invention relates to an optical information-reproducing apparatus for recording data signals, such as image data signals, on a recording medium, and for reproducing the data signals from the recording medium. More particularly, the invention relates to an optical information reproducing apparatus of the three-beam type which astigmatises light beams by using a plane-parallel plate.

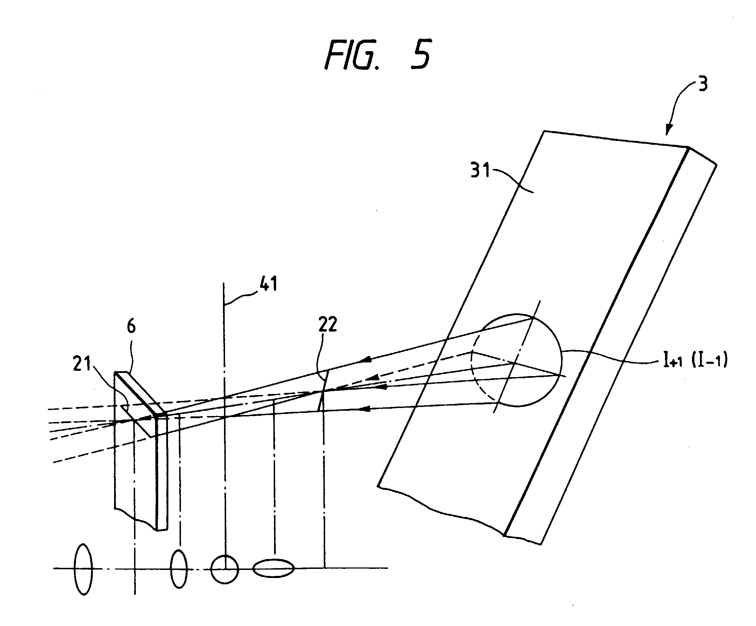

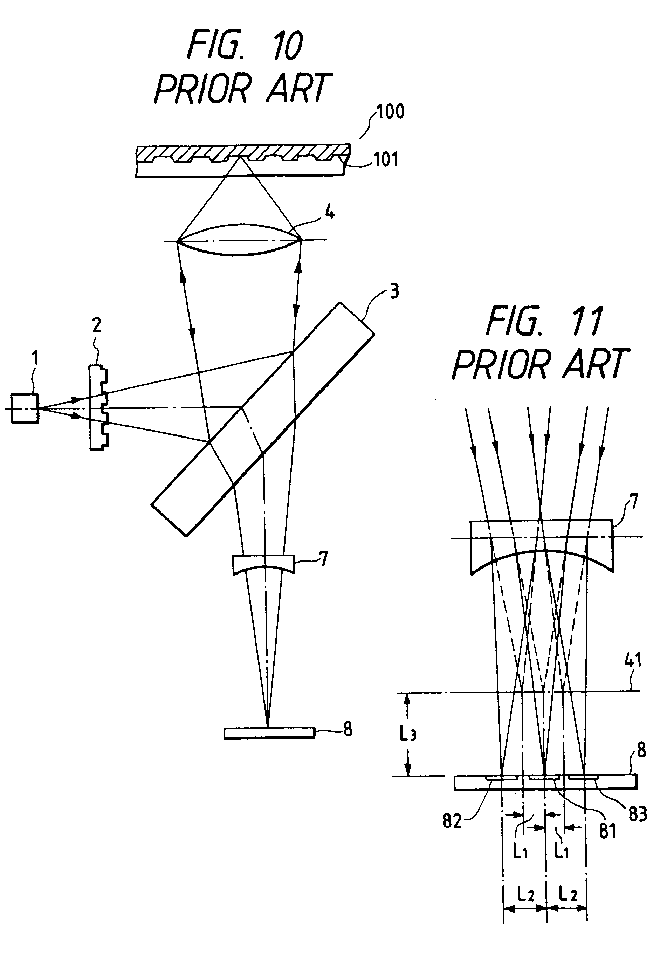

A conventional three-beam type optical information-reproducing apparatus of the type disclosed in US-A-4 973 831 is shown in Figs. 10 and 11. The optical information-reproducing apparatus is composed of a light source 1, a diffraction grating 2, a plane-parallel plate 3, an objective lens 4, a concave lens 7, and a photodetector 8. The light source 1, which may be a semiconductor laser, emits a light beam for reading data from an optical disk 100. The diffraction grating 2 splits a light beam emitted from the light source 1 into three light beams. The plane-parallel plate 3 reflects the three light beams towards the optical disk 100. The plane-parallel plate 3 receives signal light beams reflected from the optical disk 100, astigmatises the received signal light beams, and emits them outwardly towards the concave lens 7. The objective lens 4 receives the three signal light beams reflected by the plane-parallel plate 3, and forms an image on the recording surface 101 of the optical disk 100. The concave lens 7 receives the three signal light beams emitted from the plane-parallel plate 3, expands the spaces (to be described below with respect to Fig. 5) between the three light beams, and forms the image on the surface of the photodetector 8.

The operation of the optical information-reproducing apparatus thus constructed will now be described. The light beam emitted from the light source 1 is diffracted in the three directions of 0th order, +1st order, and -1st order by means of the diffraction grating 2. In other words, the light beam is split into three light beams. The three light beams are all reflected on one of the major surfaces of the plane-parallel plate 3, and are projected onto the recording surface 101 of the optical disk 100 through the objective 4. The three light beams falling on the recording surface 101 of the optical disk are then modulated in intensity according to the different reflectivities of the recording surface. The light beams reflected from the recording surface are thus intensity modulated in accordance with the recorded information. That is, the light beams are transformed into signal light. The signal light beams enter the plane-parallel plate 3 through the objective 4. In the plane-parallel plate, the signal light beams are astigmatised and then emanate from the plane-parallel plate. The signal light beams are incident on the concave lens 7 at such an angle that the beams are focused in the front focal plane 41 of the objective 4 (see Figure 11). The signal light beams, after passing through the concave lens 7, are focused on the light sensing surface of the photodetector 8.

If the concave lens 7 is not used, the three signal light beams are spaced by narrow distances L₁ and are projected on the front focal plane 41 spaced a vertical distance L₃ from the photodetector 8. With use of the concave lens 7, the diffusion characteristic of the concave lens 7, which depends on its magnification, acts on the signal light beams so that they are spaced by expanded distances L₂ (L₂ > L₁) and are projected onto the light sensing surface of the photodetector 8. Usually, two-division photodiodes (2D-PD) 82,83 and a four-division photodiode (4D-PD) 81 are formed in the light sensing surface of the photodetector. Accordingly, the three signal light beams are imaged exactly in these photodiodes. Such an arrangement is described in Japanese Patent Laid-Open Publication No. Sho. 57-205833.

A conventional optical information-reproducing apparatus not using the concave lens 7 is disclosed in Japanese Patent laid-open publication no. Sho. 63-4435. In this apparatus, the light sensing surface of the photodetector 8 is coincident with the front focal plane 41 of the objective 4. The 4D-PD 81 and the 2D-PDs 82,83 are microfabricated in the light sensing surface of the photodetector 8 so that the three signal light beams, spaced by narrow distances, will fall on these photodiodes exactly.

The first conventional device described above requires the concave lens in order to expand the beam-to-beam distance of the three signal light beams. Further, the optical path is necessarily extended by a length L₃ which depends on the length of the concave lens (Fig. 5). These facts make it difficult to obtain an overall size reduction of the apparatus.

In the second conventional device described above, a plurality of photodiodes must be microfabricated in the surface of the photodetector in a highly precise manner. This requires a high order of complexity in the microfabricating technique as compared to the first conventional device. Further, with this device, the beam-to-beam distance is greatly limited, thus restricting manufacturing freedom.

The present invention has been made in view of the above circumstances and has as an object the provision of an optical information-reproducing apparatus which can reduce the size of the overall apparatus and provide easy manufacture of the signal light receiving portion (i.e. the photodiode assembly).

To achieve the above object, there is provided an optical information reproducing apparatus for reproducing optical information stored in an optical recording medium, the apparatus comprising: a light source for generating a laser light beam; a diffraction grating for splitting the light beam into three beams; an optical element having a first major surface, for reflecting the three beams onto a recording medium and receiving the three beams reflected from the recording medium, and a second major surface, for transmitting part of the three beams received from a recording medium; and, a first detector for detecting at least one of the beams transmitted through the second surface; characterized in that the second major surface of the optical element also reflects part of the beams received from the recording medium back through the first major surface toward a second detector for detecting at least one of beams reflected from the second surface.

With such a construction, a light beam emitted from the light source is split into three light beams by diffracting the light beams with the diffraction grating. The three light beams are reflected by the first major surface of the optical element and projected onto the recording medium. The three signal light beams are reflected by the recording medium and returned to the optical element in the form of three signal light beams (modulated by information recorded on the disk). The optical element receives signal light beams from the recording medium and allows part of the signal light beams to be transmitted therethrough, emitting that part from the second major surface. Further, the optical element reflects the signal light beams on the second major surface, allows the reflected light beams to pass through the optical element, and emits the thus-reflected signal light beams from the first major surface of the optical element.

A method according to the invention is defined in claim 14 and dependent claims 15 to 17.

For signal detection, a first detector receives the central light beam (or the side light beams) of the three total signal light beams emanating from the optical element. The second detector receives the side light beams (or the central light beam). That is, if the first detector receives the central light beam, the second detector receives the two side light beams. With use of the first and second detectors thus receiving the signal light beams, the distance between photodetecting elements of the detectors can be expanded. Accordingly, there is no need for a complex and precise microfabricating technique for fabricating the photodetecting means. Further, since there is no need to use a concave lens 7, the optical path of the signal light beams can be reduced in length, leading to a size reduction of the overall apparatus.

Preferably, the first and second major surfaces of the optical element are parallel to each other.

Three examples of the present invention will now be described with reference to the accompanying drawings, in which:
Fig. 1 is a diagrammatic view showing the overall construction of an optical information-reproducing apparatus according to a first example of the present invention;
Fig. 2 shows an enlarged view of a photodetector portion of the apparatus of Fig. 1;
Fig. 3 is an explanatory diagram for explaining a state of receiving signal light beams in the apparatus of Fig. 1;
Fig. 4 is a diagrammatic view showing the overall construction of an optical information-reproducing apparatus according to a second example of the present invention;
Fig. 5 illustrates the reception of light by a second optical detector in the apparatus of Fig. 4;
Fig. 6A is a diagram showing the reception of light by a plane-parallel plate in the apparatus of Fig. 4;
Figs. 6B-6D illustrate variations of the second detector in the example of Fig. 4;
Fig. 7 is a diagrammatic view showing the overall construction of an optical information-reproducing apparatus according to a third example of the present invention;
Fig. 8 illustrates the reception of light signals in the apparatus of Fig. 7;
Fig. 9 is an enlarged view of the detector of the apparatus of Fig. 7;
Fig. 10 is a diagrammatic view showing the overall construction of a conventional optical information-reproducing apparatus; and,
Fig. 11 shows an enlarged view of a photodetector portion of the conventional apparatus of Fig. 10.

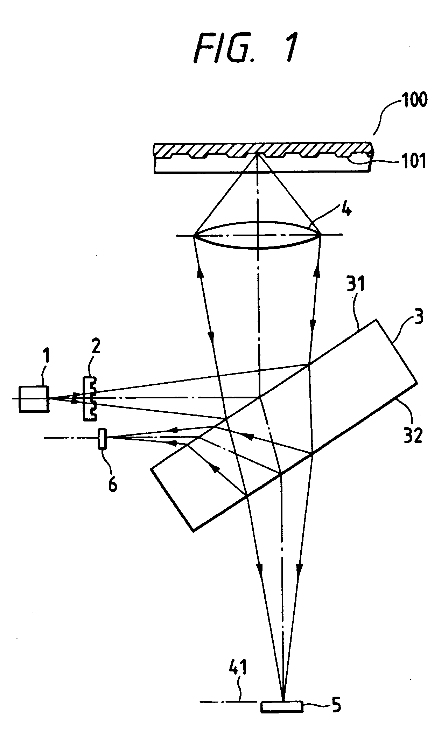

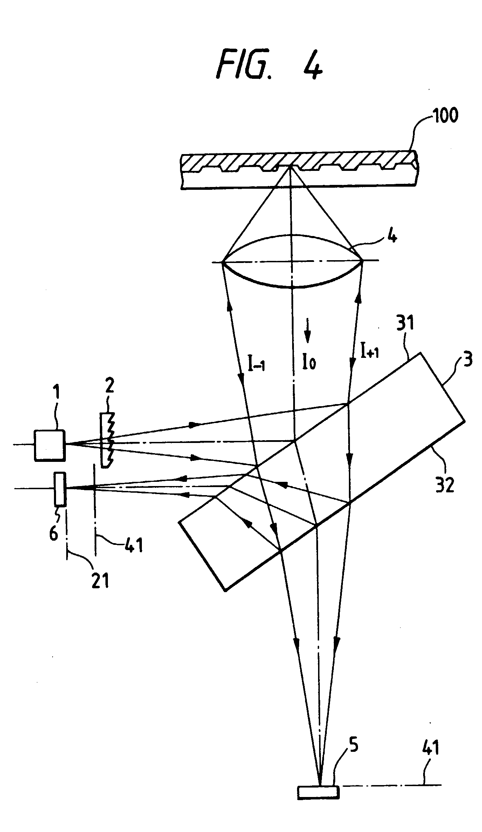

A first example of an optical information reproducing apparatus according to the present invention will be described in detail with reference to Figs. 1 through 3. In each figure, the optical information-reproducing apparatus, like the prior apparatus shown in Fig. 4, comprises a light source 1, a diffraction grating 2, a plane-parallel plate 3, and an objective lens 4, and further comprises first and second photodetectors 5,6 respectively receiving signal light beams emanating from the plane-parallel plate 3. The spectral state (optical path) of the light beams received by the first photodetector 5 is different from that of the light beams received by the photodetector 6.

The plane-parallel plate 3 is made of a transparent medium having first and second major surfaces 31,32 arranged parallel to each other. The diffraction grating 2 splits the beams of received light into three light beams of the 0th order and the +1st order. These three light beams are reflected on the first surface 31 toward the optical disk 100. The signal light beams are further reflected on the recording surface 101 of the optical disk 100. There, the beams are modulated by data recorded in the recording surface 101, whereupon the beams become modulated signal beams. The signal light beams returned from the recording surface impinge on the first surface 31 of the plane-parallel plate, and are transmitted therethrough. A part of each signal light beam is transmitted through the second surface 32 of the plane-parallel plate and a part of each signal light beam is reflected on the second surface 32 and transmitted back through the plane-parallel plate and emitted from the first surface 31 as shown in Figure 1.

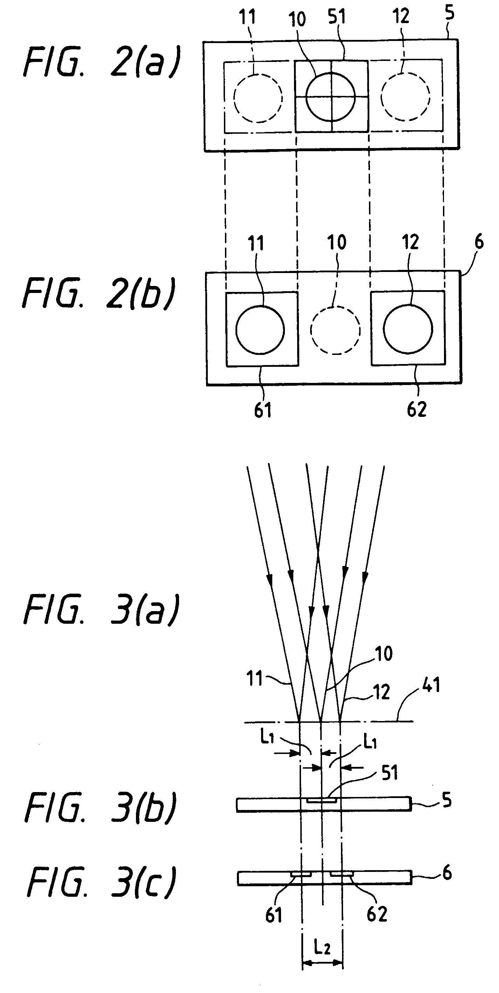

The first photodetector 5 contains a four-division photodiode (4D-PD) 51 (see Figure 2(a)) formed on its surface facing the second surface 32 of the plane-parallel plate 3. The photodiode formed surface of the detector is located in the front focal plane 41 of the objective lens 4. Thus, there is no need to use a concave lens 7 as was used in the prior art of Fig. 4.

The photodetector 5 detects a signal light beam 10 (see Figs. 2 and 3) as the main beam (the 0th order), which is the centre light beam of the three light beams emanating from the second surface 32 of the plane-parallel plate 3. The output of the first photodetector 5 is used as an RF data signal and a focus servo control signal.

The second photodetector 6 contains two two-division photodiodes (2D-PD) 61,62 formed on its surface facing the first surface 31 of the plane-parallel plate 3. The two-division photodiodes 61,62 are located in the front focal plane 41 of the objective 4. The second photodetector 6 detects signal light beams 11,12 as the sub-beams (±1st order), which are the two side light beams of the three light beams emanating from the second surface 32 of the plane parallel-plate 3. The output signal of the second photodetector 6 is used as a tracking servo control signal.

The operation of the optical information-reproducing apparatus thus constructed will now be described.

A light beam emitted from the light source 1 is diffracted in three directions of 0th order and ±1st order, so that it is split into three light beams arrayed side by side in the diffraction direction. These light beams are reflected on the first surface 31 of the plane-parallel plate 3 toward the optical disk 100. The reflected light beams are imaged on the recording surface 101 of the optical disk 100 through the objective lens 4. The light beams are intensity modulated with different reflectivities depending on the data recorded on the recording surface 101. Accordingly, the light beams reflected from the recording surface are intensity-modulated light beams, designated by reference numerals 10,11 and 12.

A part of these three light beams 10,11,12 is transmitted through the plane-parallel plate 3 and hit the 4D-PD 51 of the first photodetector 5. The remaining parts of the light beams are reflected on the second surface 32 of the plane-parallel plate 3, and are transmitted through the plane-parallel plate, emanating therefrom, and finally strike the two 2D-PDs 61 and 62 of the second photodetector 6.

The three signal light beams 10,11,12 are projected onto the 4D-PD 51 and the two 2D-PDs 61,62 as shown in Fig. 3(a). Of those signal light beams 10,11,12, the main beam or the central signal light beam 10, as shown in Fig. 3(b), is received by the 4D-PD 51. A well known means then forms an RF signal and a focus servo control signal from the output signal of the 4D-PD. The two sub-beams 11,12, as shown in Fig. 3(c), are received by the two 2D-PDs 61,62 spaced by a large distance L₂ (L₂ > L₁). A well known means forms a tracking servo control signal from the output signal of the two photodiodes 61,62.

As seen from the foregoing description, even when the three signal light beams 10,11,12 are incident on the first and second photodetectors 5,6 in a state that these beams are narrowly spaced, the 4D-PD 51 and 2D-PDs 61,62, which are formed, with less strict precision, on the sensing surfaces of the first and second photodetectors 5,6, can receive the maximum quantity of light. Accordingly, during manufacture, the photodiodes may be positioned with a relatively large tolerance. Further, the optical paths of the transmitted signal light beams may be shortened, since there is no need for the beam enlarging functions of the concave lens 7 used in the prior art. Further, the second photodetector 6 for receiving the reflected signal light beams may be disposed inside the light source 1. These beneficial features lead to a size reduction of the optical information-reproducing apparatus.

With the use of the first and second photodetecting means receiving the signal light beams, the distance between the photodetecting elements of the photodetecting means can be expanded. Accordingly, there is no need for a high order, complex microfabricating technique for fabricating the photodetecting means. Further, the optical path of the signal light beams can be reduced in length, leading to a size reduction of the overall apparatus.

In the example shown, the first photodetector 5 contains the 4D-PD and the second photodetector 6 contains the two 2D-PDs. This can, however, be reversed so that the photodetector 5 contains the two 2D-PDs and the diode 6 contains the 4D-PD.

A second example of the invention is shown in Figs. 4 to 6. Parts which correspond to those described above have the same reference numerals.

In the second example, the second optical detector 6 is positioned beyond the focal plane 41 of the objective lens 4 confronting the first surface 31 of the plane-parallel plate 3 and near caustic curves caused by the astigmatism. The first photodiode 61 is an elongate rectangular light receiving element which is large enough to receive the caustic curve of the beam I₊₁ corresponding to the auxiliary light beam of the +1st order of diffraction. Similarly, the second photodiode 62 is an elongate rectangular light receiving element which is large enough to receive the caustic curve of the beam I₋₁ corresponding to the auxiliary light beam of the -1st order of diffraction. The phrase "caustic curve caused by astigmatism" as used herein defines a curve which, in a bundle of rays, is formed by connecting the points where rays are concentrated with high density.

The three beams are focused to a focus line 22 by the astigmatism and again focused to a focus line 21 which is rotated relative to the focus line 22 by 90° as shown in Fig. 5.

The operation of the optical data recording and reproducing apparatus thus constructed will be now described and is similar to that described above for the first example.

First, the output light beam is diffracted in three directions corresponding to the 0th, +1st, and -1st orders of diffraction. The three light beams are reflected by the first surface 31 of the plane parallel plate 3 through the objective lens 4 towards the optical disk 100. The objective lens 4 serves to focus the three light beams on to the recording surface 101 of the optical disk 100 so that they are modulated with the variation in reflectivity of the recording surface 101 into three signal light beams I₀, I₊₁, and I₋₁.

A portion of the three signal light beams I₀, I₊₁, and I₋₁ are transmitted through the plane parallel plate 3 while being subjected to astigmatism and applied to the four-division photodiode (4D-PD) of the first detector 5. The remaining portions of the three signal light beams are reflected by the second surface 32 of the plane parallel plate 3 while being subjected to astigmatism, transmitted through the first surface 31 and applied to the two photodiodes 61 and 62 of the second detector 6.

Of the three signal light beams, the signal light beam I₀ corresponding to the main light beam is received by the four division photodiode, which provides an RF signal and a focus servo signal in a conventional manner.

Of the three signal light beams I₀, I₊₁ and I₋₁ which emerge from the first surface of the plane parallel plate 3, the signal light beams I₊₁ and I₋₁ are detected through the caustic curves by the two photodetectors 61 and 62, which provide a detection signal. The second optical detector 6 outputs a tracking servo control signal according to the detection signals thus provided.

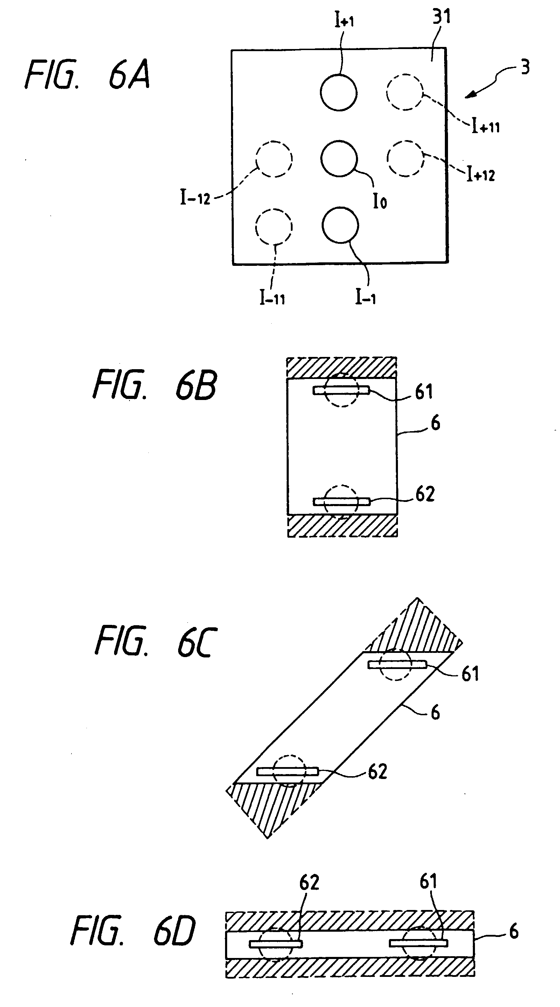

The light detecting operation according to different embodiments of the second optical detector 6 in the second example will be described with reference to Figs. 5 and 6.

In the case where the signal light beams, when applied to the second optical detector 6, are arranged in a vertical manner as indicated by I₀, I₊₁, and I₋₁ in Fig. 6A, the photodiodes 61 and 62 are vertically positioned in parallel as shown in Fig. 6B so as to detect the caustic curves of the signal light beams I₊₁ and I₋₁, respectively. As is apparent from Fig. 6B, the signal light beams are of a circular form on the front focal plane 41 of the objective lens 4, while the images of the caustic curves are of a linear form.

Accordingly, the second optical detector 6 can be miniaturised by an amount corresponding to the shaded portion shown in Fig. 6B. The miniaturisation of the second optical detector 6 eliminates any blockage of the optical path of the output laser beam of the light source 1. Furthermore, for similar reasons, other components can be arranged with a greater degree of freedom.

In the case where the signal light beams, when applied to the second optical detector 6, are arranged in a diagonal manner as indicated by I₀, I₊₁₁, and I₋₁₁ (Fig. 6A), the photodiodes 61 and 62 are positioned as shown in Fig. 6C to detect the caustic curves of the signal light beams I₊₁₁ and I₋₁₁, respectively. In this case, the shaded parts of the detector shown in Fig. 6C can be eliminated, and the second optical detector 6 can be miniaturised by a corresponding amount.

In the above-described embodiment, the plane parallel plate 3 is inclined in the direction of diffraction of the diffraction grating 2. However, the plane parallel plate 3 may be set perpendicular to the direction of diffraction of the diffraction grating 2. In this case, the signal light beams are produced as indicated by I₀, I₊₁₂, and I₋₁₂ (Fig. 6A) when applied to the second optical detector 6 from the plane parallel plate. Accordingly, the photodiodes 61 and 62, as shown in Fig. 6D, are longitudinally arranged to receive the signal light beams I₊₁₂ and I₋₁₂ corresponding to the auxiliary light beams, respectively.

As described above, portions of the three signal light beams reflected from the recording medium are transmitted through the second surface of the plane parallel plate while being subjected to astigmatism, and the remaining portions are reflected by the second surface while being subjected to astigmatism so that they are transmitted back through the first surface. The main light beam (i.e. the 0th order of diffraction) is received by the first detecting means. The remaining two light beams (i.e. the auxiliary light beams corresponding to the +1st and -1st order of diffraction) are received by the second optical detector which produces a tracking error signal.

As a result, the second optical detector can be miniaturised in the direction of arrangement of the light source. Moreover, the second optical detector will not mechanically interfere with the output of the light source. Furthermore, as the second detecting means can be reduced in size as described above, the second detecting means can be positioned very close to the light source, thus providing a greater degree of freedom in positioning other components of the apparatus.

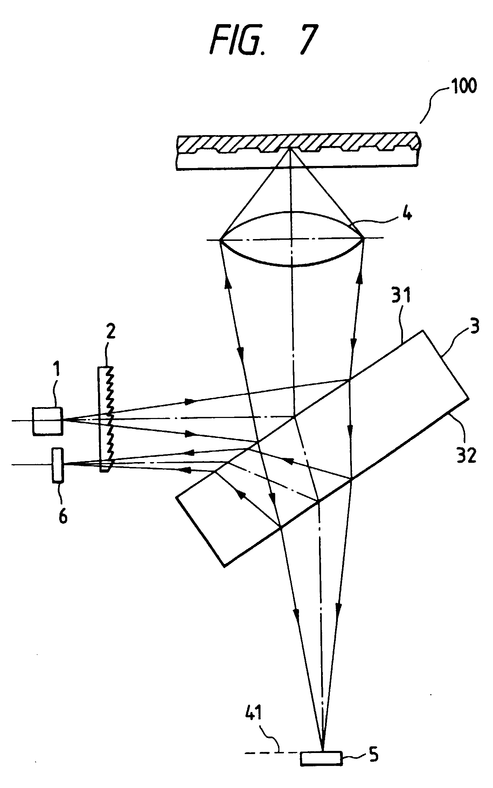

A third example of the invention is shown in Figs. 7 to 9. Parts which correspond to those described above have the same reference numerals.

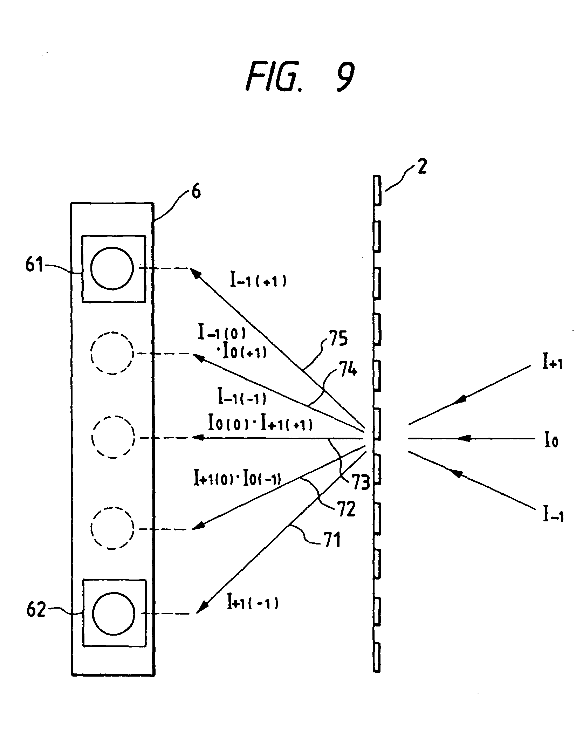

In this example, as shown in Fig. 9, the three signal light beams I₀, I₊₁ and I₋₁ reflected by the second surface 32 and emerging from the first surface 31 of the plane parallel plate 3 are diffracted by the diffraction grating 2. The photodiodes 61 and 62 are positioned where the three signal light beams I₀, I₊₁ and I₋₁ are diffracted by the diffraction grating 2 after emerging from the first surface 31 of the plane parallel plate. When the signal light beam I₀ corresponding to the main light beam and the light beams I₊₁ and I₋₁ corresponding to the auxiliary light beams of the +1st and -1st orders of diffraction are applied to the diffraction grating 2, they are diffracted according to their incident angles. Consequently, the light beams 71, 72, 73, 74 and 75 are produced. The light beam 71 corresponds to the light beam of the -1st order of diffraction (I₊₁₍₋₁₎) of the signal light beam I₊₁. The light beam 72 corresponds to the light beam of the 0th order of diffraction (I₊₁₍₀₎) of the signal light beam 1₊₁ and the -1st order of diffraction (I₀₍₋₁₎) of the signal light beam I₀. The light beam 73 corresponds to the light beam of the +1st order of diffraction (I₊₁₍₊₁₎) of the signal light beam I₊₁, the 0th order of diffraction (I₀₍₀₎) of the signal light beam I₀, and the -1st order of diffraction (I₋₁₍₋₁₎) of the signal light beam I₋₁. The light beam 74 corresponds to the light beam of the 0th order of diffraction (I₋₁₍₀₎) of the signal light beam I₋₁ and the +1st order of diffraction (I₀₍₊₁₎) of the signal light beam I₀. Finally, the light beam 75 corresponds to the light beam of the +1st order of diffraction (I₋₁₍₊₁₎) of the signal light beam I₋₁.

The photodiodes 61 and 62 respectively receive the light beams 75 and 71 of the +1st order of diffraction I₋₁₍₊₁₎ of the signal light beam I₋₁ and of the -1st order of diffraction I₊₁₍₋₁₎ of the signal light beam I₊₁ and output a tracking servo control signal. Each of these light beams 71 and 75 contains neither the signal light beam I₀ nor any orders of diffraction of the signal light beam I₀ and thus an accurate tracking servo control signal can be generated.

The operation of the third example will now be described inasmuch as it differs from the examples described above.

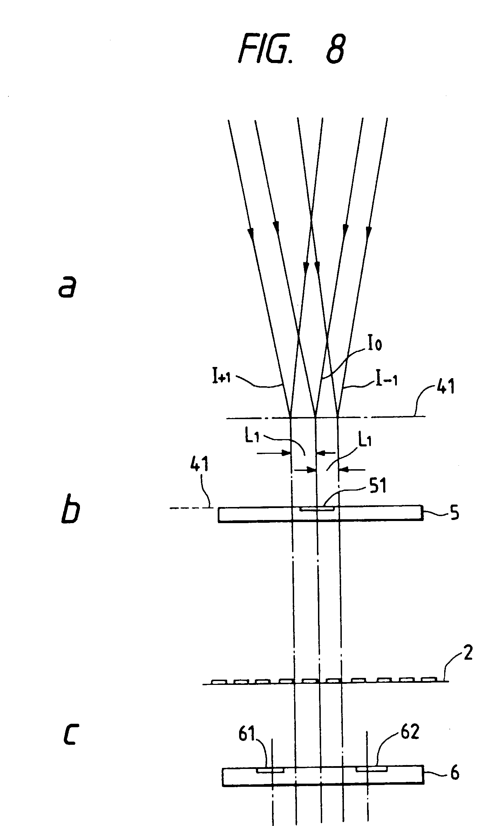

The three signal light beams I₀, I₊₁ and I₋₁ are applied to the four-division photodiode 51 and the photodiodes 61 and 62 as shown in Fig. 8. Of the three signal light beams, the signal light beam I₀, which corresponds to the main light beam, is received by the four-division photodiode 51 wherein an RF signal and a focus servo signal is generated in a conventional manner as shown in Fig. 8b.

The signal light beam I₀ corresponding to the main light beam, and the signal light beams I₊₁ and I₋₁ corresponding to the auxiliary light beams of the +1st and -1st orders of diffraction are applied to the diffraction grating 2 as shown in Fig. 8c. Only the light beams of the +1st and -1st order of diffraction I₋₁₍₊₁₎ and I₊₁₍₋₁₎ of the signal light beams I₋₁ and I₊₁, which respectively correspond to the auxiliary light beams of the +1st and -1st orders of diffraction, are detected by the two photodetectors 61 and 62 of the second optical detector 6.

At the position where the light beam 71 of the -1st order of diffraction (I₊₁₍₋₁₎) of the signal light beam I₊₁ and the light beam 75 of the +1st order of diffraction (I₋₁₍₊₁₎) of the signal light beam I₋₁ are image-formed, the signal light beam I₀ corresponding to the main light beam having minimal effect. Although the light beams of the +2nd and -2nd orders of diffraction of the signal light beam I₀ are also formed at these positions (i.e. 71 and 75), they are extremely low in luminance and therefore do not have any effect.

Thus, two of the diffraction light beams which the signal light beams form when passed through the diffraction grating (which correspond to the light beam of the -1st order of diffraction of the auxiliary light beam of the +1st order of diffraction and the light beam of the +1st order of diffraction corresponding to the auxiliary light beam of the -1st order of diffraction respectively) are received by the second detecting means, where a tracking error signal is produced and output. Accordingly, detection of the auxiliary light beams is not affected by the main light beam and a tracking error signal can be detected with high accuracy.

Furthermore, the provision of the first and second detectors for detecting the signal light beams enables the apparatus to be miniaturised without interfering with any optical light path.

In the examples described above, the plane-parallel plate is made of a transparent medium and the planes arranged parallel to each other are also transparent. If required, one or both of the parallel planes may be coated with a semi-transparent half-silvered mirror.

## Claims

1. An optical information reproducing apparatus for reproducing optical information stored in an optical recording medium (100), the apparatus comprising:
a light source (1) for generating a laser light beam;
a diffraction grating (2) for splitting the light beam into three beams;
an optical element (3) having a first major surface (31), for reflecting the three beams onto a recording medium (100) and receiving the three beams reflected from the recording medium, and a second major surface (32), for transmitting part of the three beams received from a recording medium; and
a first detector (5) for detecting at least one of the beams transmitted through the second surface;
characterized in that the second major surface (32) of the optical element (3) also reflects part of the beams received from the recording medium back through the first major surface toward
a second detector (6) for detecting at least one of the beams reflected from the second surface.

2. Apparatus according to claim 1, wherein the first detector (5) detects the central light beam of the three signal light beams and outputs an electrical signal in the form of a data signal and a focus control signal, and the second detector (6) detects the side light beams of the three signal light beams and outputs an electrical signal in the form of a tracking control signal.

3. Apparatus according to claim 1 or claim 2, wherein the first and second major surfaces of the optical element are parallel to each other.

4. Apparatus according to claim 3, wherein the optical element (3) is arranged to reflect the three light beams in a vertical manner and wherein the second detector (6) comprises photodiodes (61,62) vertically arranged to receive the first and second auxiliary light beams.

5. Apparatus according to claim 3, wherein the optical element (3) is arranged to reflect the three light beams in a diagonal manner and wherein the second detector (6) comprises photodiodes (61,62) diagonally arranged to receive the first and second auxiliary light beams.

6. Apparatus according to claim 3, wherein the optical element (3) is arranged perpendicular to a direction of diffraction of the diffraction grating (2) and wherein the second detector (6) comprises photodiodes (61,62) longitudinally arranged to receive the first and second auxiliary light beams.

7. Apparatus according to any of claims 1 to 3, wherein the second detector (6) receives the three signal light beams reflected by the second surface and diffracted by the diffraction grating and detects a first beam (71,I₊₁₍₋₁₎) corresponding to the -1st order of diffraction of the auxiliary light beam of the +1st order of diffraction and a second light beam (75,I₋₁₍₊₁₎) of the +1st order of diffraction of the auxiliary light beam of the -1st order of diffraction, and outputs a tracking error signal in accordance therewith.

8. Apparatus according to any of claims 1 to 7, further comprising an objective lens (4) for focusing the three signal light beams reflected by the first major surface of the optical element onto the recording surface of a recording medium.

9. Apparatus according to claim 8, wherein the first detector (5) comprises a four-division photodiode in a front focal plane of the objective lens (4).

10. Apparatus according to claim 8 or claim 9, wherein the second optical detector (6) comprises photodiodes (61,62) in a front focal plane of the objective lens (4).

11. Apparatus according to claim 8 or claim 9, wherein the second optical detector (6) comprises photodiodes (61,62) beyond a front focal plane of the objective lens (4).

12. Apparatus according to claim 11, wherein the photodiodes are elongate and rectangular in shape.

13. Apparatus according to any of claims 1 to 12, wherein at least one of the first and second major surfaces (31,32) of the optical element (3) is coated with a half-mirror on a transparent medium.

14. A method of reproducing optical information from a recording medium (100) comprising the steps of:
(a) generating a laser light beam; and,
(b) using an optical element (3) to:
(i) reflect the beam towards the recording medium (100),
(ii) receive a signal beam reflected from the recording medium, and
(iii) pass the signal beam through the optical element (3) to a photodetector (5) on the other side of the optical element,
characterized in that it further comprises the step of using the optical element (3) to :
(iv) reflect the signal beam to another photodetector (6) located on the same side of the optical element that the signal light beam enters.

15. A method according to claim 14, wherein the step (a) comprises splitting an original laser beam into three beams.

16. A method according to claim 15, wherein the photodetector in the step (b) (iii) detects one of the three beams and the photodetector in the step (b) (iv) detects the other two of the beams.

17. A method according to claim 15, wherein the photodetector in the step (b) (iv) detects one of the three beams and the photodetector in the step (b)(iii) detects the other two of the beams.

## Patentansprüche

1. Optisches Informationswiedergabegerät zum Wiedergeben von optischer Information, die in einem optischen Aufnahmemedium (100) gespeichert ist, umfassend:
eine Lichtquelle (1) zum Erzeugen eines Laserlichtstrahles;
ein Beugungsgitter (2) zum Teilen des Lichtstrahles in drei Strahlen;
ein optisches Element (3) mit einer ersten Hauptoberfläche (31), die die drei Strahlen auf ein Aufnahmemedium (100) reflektiert und die drei von dem Aufnahmemedium reflektierten Strahlen empfängt, und einer zweiten Hauptoberfläche (32), die einen Teil der von einem Aufnahmemedium empfangenen drei Strahlen überträgt, und
einen ersten Detektor (5), der wenigstens einen der durch die zweite Oberfläche übertragenen Strahlen detektiert,
dadurch gekennzeichnet, daß die zweite Hauptoberfläche (32) des optischen Elements (3) auch einen Teil der von dem Aufnahmemedium empfangenen Strahlen durch die erste Hauptoberfläche in Richtung auf einen zweiten Detektor (6) zurückreflektiert, der wenigstens einen der von der zweiten Oberfläche reflektierten Strahlen detektiert.

2. Gerät nach Anspruch 1, bei dem der erste Detektor (5) den mittleren Lichtstrahl der drei Signallichtstrahlen detektiert und ein elektrisches Signal in der Form eines Datensignals und eines Fokussteuersignals ausgibt, und der zweite Photodetektor (6) die seitlichen Lichtstrahlen der drei Signallichtstrahlen detektiert und ein ein elektrisches Signal in der Form eines Nachführsteuersignals ausgibt.

3. Gerät nach Anspruch 1 oder 2, bei dem die erste und die zweite Hauptoberfläche des optischen Elements parallel zueinander liegen.

4. Gerät nach Anspruch 3, bei dem das optische Element (3) angeordnet ist, die drei Lichtstrahlen in einer vertikalen Weise zu reflektieren, und bei dem der zweite Detektor (6) vertikal angeordnete Photodioden (61, 62) umfaßt, um den ersten und zweiten Hilfslichtstrahl zu empfangen.

5. Gerät nach Anspruch 3, bei dem das optische Element (3) angeordnet ist, die drei Lichtstrahlen in einer diagonalen Weise zu reflektieren, und bei dem der zweite Detektor (6) diagonal angeordnete Photodioden (61, 62) umfaßt, um den ersten und zweiten Hilfslichtstrahl zu empfangen.

6. Gerät nach Anspruch 3, bei dem das optische Element (3) senkrecht zu einer Beugungsrichtung des Beugungsgitters (2) angeordnet ist, und bei dem der zweite Detektor (6) der Länge nach angeordnete Photodioden (61, 62) umfaßt, um den ersten und zweiten Hilfslichtstrahl zu empfangen.

7. Gerät nach einem der Ansprüche 1 bis 3, bei dem der zweite Detektor (6) die durch die zweite Oberfläche reflektierten und durch das Beugungsgitter gebeugten drei Signallichtstrahlen empfängt und einen ersten Strahl (71, I_{+1[-1]}), der der -1-ten Beugungsordnung des Hilfslichtstrahls der +1-ten Beugungsordnung entspricht, und einen zweiten Lichtstrahl (75, I_{-1[+1]}) der +1-ten Beugungsordnung des Hilfslichtstrahls der -1-ten Beugungsordnung detektiert und ein entsprechendes Nachführfehlersignal ausgibt.

8. Gerät nach einem der Ansprüche 1 bis 7, weiter umfassend eine Objektivlinse (4), die die durch die erste Hauptoberfläche des optischen Elements reflektierten drei Signallichtstrahlen auf die Aufnahmeoberfläche eines Aufnahmemediums fokussiert.

9. Gerät nach Anspruch 8, bei dem der erste Detektor (5) eine vierteilige Photodiode in einer vorderen Brennebene der Objektivlinse (4) umfaßt.

10. Gerät nach Anspruch 8 oder Anspruch 9, bei dem der zweite optische Detektor (6) Photodioden (61, 62) in einer vorderen Brennebene der Objektivlinse (4) umfaßt.

11. Gerät nach Anspruch 8 oder Anspruch 9, bei dem der zweite optische Detektor (6) Photodioden (61, 62) hinter einer vorderen Brennebene der Objektivlinse (4) umfaßt.

12. Gerät nach Anspruch 11, bei dem die Photodioden eine längliche und rechteckige Form aufweisen.

13. Gerät nach einem der Ansprüche 1 bis 12, bei dem wenigstens eine der ersten und zweiten Hauptoberfläche (31, 32) des optischen Elements (3) mit einem Halbspiegel auf einem durchsichtigen Medium beschichtet ist.

14. Verfahren zum Wiedergeben optischer Information von einem Aufnahmemedium (100), umfassend die Schritte:
(a) Erzeugen eines Laserlichtstrahles und
(b) Verwenden eines optischen Elements (3), um
(i) den Strahl in Richtung auf das Aufnahmemedium (100) zu reflektieren,
(ii) einen von dem Aufnahmemedium reflektierten Signalstrahl zu empfangen und
(iii) den Signalstrahl durch das optische Element (3) zu einem Photodetektor (5) auf der anderen Seite des optischen Elements zu führen,
dadurch gekennzeichnet, daß es weiter den Schritt des Verwendens des optischen Elements (3) umfaßt, um
(iv) den Signalstrahl zu einem weiteren Photodetektor (6) zu reflektieren, der auf derselben Seite des optischen Elements gelegen ist, auf der der Signallichtstrahl eintritt.

15. Verfahren nach Anspruch 14, bei dem der Schritt (a) das Teilen eines ursprünglichen Laserstrahles in drei Strahlen umfaßt.

16. Verfahren nach Anspruch 15, bei dem der Photodetektor im Schritt (b) (iii) einen der drei Strahlen detektiert und der Photodetektor im Schritt (b) (iv) die anderen zwei Strahlen detektiert.

17. Verfahren nach Anspruch 15, bei dem der Photodetektor im Schritt (b) (iv) einen der drei Strahlen detektiert und der Photodetektor im Schritt (b) (iii) die anderen zwei Strahlen detektiert.

## Revendications

1. Appareil de reproduction d'information optique pour reproduire de l'information optique mémorisée sur un support d'enregistrement optique (100), l'appareil comprenant :
une source de lumière (1) pour produire un faisceau de lumière laser ;
un réseau de diffraction (2) pour diviser le faisceau de lumière en trois faisceaux ;
un élément optique (3) ayant une première grande face (31), pour réfléchir les trois faisceaux sur un support d'enregistrement (100) et pour recevoir les trois faisceaux réfléchis par le support d'enregistrement, et une seconde grande face (32), pour transmettre une partie des trois faisceaux reçus d'un support d'enregistrement ; et
un premier détecteur (5) pour détecter au moins l'un des faisceaux transmis par la seconde face ;
caractérisé en ce que la seconde grande face (32) de l'élément optique (3) réfléchit également en retour une partie des faisceaux, reçus du support d'enregistrement à travers la première grande face, en direction d'un second détecteur (6), pour détecter au moins l'un des faisceaux réfléchis par la seconde face.

2. Appareil selon la revendication 1, dans lequel le premier détecteur (5) détecte le faisceau de lumière central des trois faisceaux de lumière de signal et sort un signal électrique sous la forme d'un signal de donnée et d'un signal de commande de mise au point, et dans lequel le second détecteur (6) détecte les faisceaux de lumière latéraux des trois faisceaux de lumière de signal et sort un signal électrique sous la forme d'un signal de commande de suivi de piste.

3. Appareil selon la revendication 1 ou la revendication 2, dans lequel les première et seconde grandes faces de l'élément optique sont parallèles l'une à l'autre.

4. Appareil selon la revendication 3, dans lequel l'élément optique (3) est disposé pour réfléchir les trois faisceaux de lumière d'une manière verticale, et dans lequel le second détecteur (6) comprend des photodiodes (61, 62) disposées verticalement pour recevoir les premier et second faisceaux de lumière auxiliaires.

5. Appareil selon la revendication 3, dans lequel l'élément optique (3) est disposé pour réfléchir les trois faisceaux de lumière d'une manière diagonale, et dans lequel le second détecteur (6) comprend des photodiodes (61, 62) disposées en diagonale pour recevoir les premier et second faisceaux de lumière auxiliaires.

6. Appareil selon la revendication 3, dans lequel l'élément optique est disposé perpendiculairement à la direction de diffraction du réseau de diffraction (2), et dans lequel le second détecteur (6) comprend des photodiodes (61, 62) disposées longitudinalement pour recevoir les premier et second faisceaux de lumière auxiliaires.

7. Appareil selon l'une quelconque des revendications 1 à 3, dans lequel le second détecteur (6) reçoit les trois faisceaux de lumière de signal réfléchis par la seconde face et diffractés par le réseau de diffraction et détecte un premier faisceau (71, I₊₁₍₋₁₎), correspondant au -1^{er} ordre de diffraction du faisceau de lumière auxiliaire du +1^{er} ordre de diffraction, et un second faisceau (75, I₋₁₍₊₁₎) du +1^{er} ordre de diffraction du faisceau de lumière auxiliaire du -1^{er} ordre de diffraction, et sort un signal d'erreur de suivi de piste en fonction de celui-ci.

8. Appareil selon l'une quelconque des revendications 1 à 7, comprenant, en outre, une lentille d'objectif (4) pour mettre au point les trois faisceaux de lumière de signal, réfléchis par la première grande face de l'élément optique, sur la surface d'enregistrement d'un support d'enregistrement.

9. Appareil selon la revendication 8, dans lequel le premier détecteur (5) comprend une photodiode à quatre divisions dans un plan focal avant de la lentille d'objectif (4).

10. Appareil selon la revendication 8 ou la revendication 9, dans lequel le second détecteur (6) comprend des photodiodes (61, 62) dans un plan focal avant de la lentille d'objectif (4).

11. Appareil selon la revendication 8 ou la revendication 9, dans lequel le second détecteur (6) comprend des photodiodes (61, 62) au-delà d'un plan focal avant de la lentille d'objectif (4).

12. Appareil selon la revendication 11, dans lequel les photodiodes sont de forme allongée et rectangulaire.

13. Appareil selon l'une quelconque des revendications 1 à 12 dans lequel au moins l'une des première et seconde grandes faces (31, 32) de l'élément optique (3) est revêtue d'un semi-miroir sur un milieu transparent.

14. Procédé de reproduction d'information optique à partir d'un support d'enregistrement (100), comprenant les étapes :
(a) de production d'un faisceau de lumière laser ; et
(b) d'utilisation d'un élément optique (3) pour :
(i) réfléchir le faisceau en direction du support d'enregistrement (100) ;
(ii) recevoir un faisceau de signal réfléchi par le support d'enregistrement ; et
(iii) faire passer le faisceau de signal à travers l'élément optique (3) vers un photodétecteur (5) de l'autre côté de l'élément optique ;
caractérisé en ce qu'il comprend, en outre, l'étape d'utilisation de l'élément optique (3) pour :
(iv) réfléchir le faisceau de signal vers un autre photodétecteur (6) situé du côté de l'élément optique par lequel entre le faisceau de lumière de signal.

15. Procédé selon la revendication 14, dans lequel l'étape (a) comprend la division d'un faisceau laser d'origine en trois faisceaux.

16. Procédé selon la revendication 15, dans lequel le photodétecteur dans l'étape (b) (iii) détecte l'un des trois faisceaux et dans lequel le photodétecteur dans l'étape (b) (iv) détecte les deux autres faisceaux.

17. Procédé selon la revendication 15, dans lequel le photodétecteur dans l'étape (b) (iv) détecte l'un des trois faisceaux et dans lequel le photodétecteur dans l'étape (b) (iii) détecte les deux autres faisceaux.
